(19) Europäisches Patentamt
European Patent Office
Office européen des brevets

(11) Publication number: 0 036 057
B1

(12) **EUROPEAN PATENT SPECIFICATION**

(45) Date of publication of patent specification: **30.05.84**

(51) Int. Cl.³: **B 01 J 27/18,** B 01 J 27/28, B 01 J 23/28, B 01 J 23/92, B 01 J 23/88, B 01 J 23/68

(21) Application number: **80304639.0**

(22) Date of filing: **19.12.80**

(54) **A method for the activation, maintenance of activity, improvement of activity and reactivation of phosphomolybdic acid based catalysts.**

(30) Priority: **27.12.79 US 107673**
**27.12.79 US 107736**
**31.12.79 US 108867**

(43) Date of publication of application:
**23.09.81 Bulletin 81/38**

(45) Publication of the grant of the patent:
**30.05.84 Bulletin 84/22**

(84) Designated Contracting States:
**BE CH DE FR GB IT LI LU NL SE**

(56) References cited:
**FR-A-2 325 428**
**GB-A-1 464 198**

(73) Proprietor: **THE STANDARD OIL COMPANY**
**Midland Building**
**Cleveland, Ohio 44115 (US)**

(72) Inventor: **Farrington, Diane Gladys**
**8378 Whitewood Road**
**Brecksville Ohio 44141 (US)**
Inventor: **Paparizos, Christos**
**28748 Forest Road**
**Willowick Ohio 44094 (US)**
Inventor: **White, James Ferguson**
**1315 Amstel Way**
**Westchester Pennsylvania 19380 (US)**
Inventor: **Shaw, Wilfrid Garside**
**1028 Linden Lane**
**Lyndhurst Ohio 44124 (US)**

(74) Representative: **Smith, Sydney et al**
**Elkington and Fife High Holborn House 52/54**
**High Holborn**
**London WC1V 6SH (GB)**

**EP 0 036 057 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method for the activation, maintenance of activity and reactivity of promoted phosphomolybdic acid (PMA) based catalysts.

Catalysts comprising phosphomolybdic acid (PMA) and various salts thereof have recognized utility in several areas of petrochemical processing. An area of particular importance and which relates to the present invention is the use of phosphomolybdic acid based compounds as catalysts for the selective direct oxidation of unsaturated aldehydes such as methacrolein to its corresponding acid, methacrylic acid. Catalysis with supported or unsupported dehydrated phosphomolybdic acid in combination with small amounts of promoters such as antimony, arsenic, bismuth, copper, tellurium and hydroxides or decomposable salts of alkalis and alkali earth metals is a process of specific economic interest.

More generally, the catalysts which can be activated according to the method set forth herein are redox type catalysts which are utilized in oxidation, ammoxidation and hydrolytic reactions. Such catalysts are often thermally sensitive but can be satisfactorily activated by the method of this invention.

It has become well known that phosphomolybdic acid (PMA) and salts thereof are sensitive to significant structural change caused by thermal, hydrolytic or reductive stress. As is to be expected, such physical and chemical changes caused by these stresses are directly reflected in a reduction in catalytic activity. Thus, it has not been uncommon for much of the catalytic activity to be lost after only a relatively short on-stream time.

Deactivation of promoted PMA based catalysts can occur by processes which cause loss of acid sites via condensation crosslinking. Contacting an active deammoniated promoted PMA based catalyst with moisture below 100°C is a certain means of causing deactivation. In this temperature range water vapor undergoes capillary and surface condensation within the catalyst particles. Generally, shutdown of the reactor for significant periods of time is marked by a significant decrease in catalytic activity.

Scheduled and unscheduled reactor shutdowns during catalytic operations inevitably occur. Experience in both laboratory and pilot plants has shown that the usual procedure of flushing the reactor with air, nitrogen and/or steam or, the static system for shutting down and holding promoted PMA based catalysts at bath temperatures has caused a substantial decline in catalytic performance when the oxidation reaction is again resumed.

In addition to the cooling down deactivation, other processes that can cause mass transport and result in deactivating condensation crosslinking are deep reduction and thermal excursion. Overheating of the catalyst can also result in complete decomposition of the acid structure to its components oxides $MoO_3$ and $P_2O_5$. While the occurrence of these deactivations can be minimized by avoiding reactor shut-down and otherwise controlling the catalytic process, nevertheless, deactivation inevitably occurs. In fact, in the conversion of methacrolein to methacrylic acid, significant loss of catalytic activity can be noted after only a few hundred hours of use.

The present invention relates in particular to methods for the effective reactivation of PMA based catalysts having been deactivated in the foregoing conversion of aldehyde to acid. In order for the catalyst reactivation to be practical from a consideration of techanical as well as economic aspects, it is necessary that reactivation can be carried out without necessitating reactor shut-down and catalyst removal or, in the case of a fluid-bed operation, that reactivation can be carried out in a conventional regenerator vessel. This restriction therefore dictates that the deactivated catalyst be reactivated in the vapor phase.

Catalysts for the oxidation of unsaturated aldehydes to unsaturated acids are generally well known in the literature and in various patents. U.S.—A—2,865,873 and 3,882,047 and Japanese Patent 47-33082 disclose such catalysts wherein ammonia or an ammonium-containing compound is incorporated in the preparation of the catalysts.

U.S.—A—2,865,873 in Column 13, Examples 101 to 104 discloses a process for the preparation of methacrylic acid using catalysts consisting of molybdenum, phosphorus, titanium and oxygen, wherein ammonium paramolybdate is employed in the preparation of the catalysts. The highest yield of methacrylic acid produced is about 39.56%.

U.S.—A—3,882,047 discloses the preparation of methacrylic acid using catalysts containing molybdenum, phosphorous, at least one element such as thallium, rubidium, cesium and potassium, and at least one element such as chromium, silicon, aluminium, iron and titanium. This reference teaches the incorporation of ammonia or ammonium-containing compounds in the preparation of all catalysts exemplified in the oxidation of methacrolein or acrolein; phosphomolybdic acid is employed in the preparation of virtually all catalysts exemplified; and in a few examples, ammonium molybdate is employed. This patent discloses in Column 3, lines 30—40 as follows:

"It is preferred that the catalyst be prepared so that the constituent elements will form complex compounds such as heteropolyacids, then acid salts or ammonium salts".

Japanese Patent 47-33082 discloses a process for reclaiming an ammonia-modified phosphorous-molybdenum-X-oxygen catalyst, wherein X is at least one element selected from the group consisting of antimony, arsenic, bismuth, cadmium, germanium, indium, iron, lead, silicon,

thallium and tin. Preparation of the catalyst involves treating the catalyst with ammonia and water by oxidizing the catalyst in advance or by oxidizing it simultaneously with the treatment of ammonia and water. This patent discloses that the ammonia forms a complex compound with the other elements present. Notwithstanding the various methods of preparation disclosed in the foregoing patents, none discloses a fast, low temperature activation of thermally unstable catalysts. We are furthermore unaware of any reference which discloses the activation of these catalysts with oxides of nitrogen.

While much has been published or patented on the subject of promoted PMA based catalysts and their uses as oxidation catalysts, to our knowledge there have been no fixed-bed plants in operation for methacrolein oxidation and no patents exist that set forth any procedure for maintaining a promoted PMA based oxidation catalyst during shutdowns. Standard fixed-bed shutdown and holding procedures have been shown to be detrimental to catalyst performance. If the bath were to be cooled during a shutdown, to for example 250°C, catalyst maintenance might be possible, however, it would be both awkward and impractical to cool and/or drain the salt during each shutdown and, such a practice would likely require hours to accomplish.

Thus, the prior art of which we are aware has not disclosed a method by which the activity of a PMA based catalyst can be maintained during reactor shutdown. To be useful, we believe the maintenance of PMA based catalysts during shutdown must be relatively inexpensive, simple and quick to accomplish without necessitating cooling or draining of the salt from the reactor bath.

While much has been published or patented on the subject of promoted PMA based catalysts and their uses as oxidation catalysts and, reactivation of other catalysts is generally known, very little prior work directed toward the reactivation of such catalysts has been reported. One such method that is known is disclosed in Japanese patent application No. 77/29,660, filed by Mitsubishi Rayon Co., Ltd., which describes the regeneration of a PMA based catalyst by treatment with ammonium hydroxide, and hydrogen peroxide or ozone and optionally also with nitric acid or ammonium nitrate. The inventors reported that the initial oxidation of methacrolein with the fresh catalyst gave 88% selectivity to methacrylic acid with 66% conversion of methacrolein; the spent catalyst gave only 71.5% selectivity to methacrylic acid with 30.3% conversion of methacrolein and, that following regeneration with ammonium nitrate and ammonium hydroxide and 5 parts of 30% hydrogen peroxide for 30 minutes at 90°C, the catalyst gave 88.1% selectivity to methacrylic acid with 65.1% conversion of methacrolein. This process is undesirable inasmuch as it merely attempts to oxidize the deactivated catalyst and to do so outside of the reactor, necessitating shut-down.

Several other Japanese patents exist which disclose the use of ammonia for regeneration of spent PMA catalysts. However, none of which we are aware is directed toward reactivation of PMA based catalysts with nitrogen oxides.

Use of nitric oxide to reactivate a supported palladium catalyst containing 1% palladium has been described in Japan Kokai 75,75,587, wherein full reactivation was obtained by heating the catalyst with acetic acid in the presence of a nitrogen containing oxidant followed by treatment with potassium acetate. The latter treatment is indicative of a reconstructive regeneration. German Offenlegungsschrift 2,126,007 sets forth a regeneration scheme for a spent aluminium oxide/boric acid rearrangement catalyst by heating while fluidizing with air containing nitrogen oxide.

In more recent work, conducted in our laboratories, promoted PMA based catalysts can be regenerated in the presence of ammonia and hydrochloric acid. Such a process is referred to as corrosive reconstruction wherein a reconstructive transformation occurs generally involving the breakdown of one crystal lattice and the reorganization of another. Unless catalyzed in some manner, such reconstructive transitions have an appreciable activation energy compared to displacive transitions wherein only relatively minor shifts of atoms occur. It is believed that displacive transition would permit a deactivated catalyst to be reactivated *in situ* with a single oxidizing gas.

Thus, the prior art of which we are aware has not set forth a method by which a deactivated promoted PMA based catalyst can be reactivated with only a gaseous oxide of nitrogen or mixtures thereof. To be useful, we believe the reactivation of promoted PMA based catalysts must occur in the vapor phase, and whether inside or outside of the reactor, without catalyst removal. It is also necessary to reactivate the catalyst in a manner that is compatible with a fluid-bed process. It would be further useful to be able to treat the catalyst during on-stream use thereby maintaining its activity over greater periods of time.

It is therefore an object of the present invention to provide a method for the activation of promoted PMA based catalysts utilized in the oxidation of unsaturated aldehydes to acids.

It is another object of the present invention to provide a method for the activation of promoted PMA based catalysts in shorter times than have been employed heretofore to yield highly active and selective catalysts.

It is yet another object of the present invention to provide a method for the preparation of thermally unstable catalysts such as promoted PMA based catalysts at temperatures well below normal activation temperatures whereby catalyst life is prolonged.

It is another object of the present invention to provide a method for readily and inexpensively maintaining the activity of promoted PMA based catalysts during reactor shutdown without necessitating cooling or draining of the salt from the reactor bath.

It is yet another object of the present invention to provide a method for improving the activity of promoted PMA based catalysts during reactor shutdown.

Other objects of the invention include the provision of a method for readily reactivating promoted PMA based catalysts without necessitating removal of the catalyst from the reactor for treatment followed by the reloading thereof; the provision of vapor phase method for reactivating such catalysts; and the provision of a method for reactivating such catalysts that can be employed during on-stream use of the catalyst.

These and other objects, together with the advantages thereof over known methods, which will become apparent from the specification which follows, are accomplished by the invention as hereinafter described and claimed. We have found according to the invention that those objects and others described below may be achieved by feeding a nitrogen-containing compound selected from gaseous oxides of nitrogen, nitric acid and nitrous acid and mixtures thereof over the deactivated catalyst at a temperature of from 125°C to 400°C. When the method is to be conducted *in situ*, the additional steps of terminating the reactant feed, adjusting the reactor temperature to that which is necessary for the reactivation or maintenance of activity, and in the case of reactivation, sweeping the reactor with an inert gas are first conducted. If the reactivation is to be conducted outside of the reactor, its initial removal to a suitable regenerating vessel is all that is required prior to treatment, followed by its return to the reactor.

According to the invention therefore there is provided a method for the activation, including maintenance and improvement of activity during reactor shutdown and reactivation of promoted phosphomolybdic acid based catalysts characterised in that one treats the catalyst precursor with a nitrogen-containing compound selected from gaseous oxides of nitrogen, nitric acid and nitrous acid and mixtures thereof at a temperature of from 125°C to 400°C.

As will be discussed in greater detail hereinbelow, the nitrogen-containing compound is preferably a gaseous nitrogen oxide, in particular nitric oxide which is passed over the catalyst for a period of at least five minutes and at a rate to provide a contract time therewith of at least two seconds. The nitric oxide is preferably fed to the reactor in admixture with an inert gas such as nitrogen.

In a preferred method of carrying out the invention the catalyst commonly employed in the preparation of methacrylic acid from methacrolein and possibly acrylic acid from acrolein is used this being a PMA based catalyst which can be provided with one or more metallic promoters and which has the general formula $Mo_xP_yA_aB_bC_cD_dE_eO_z$. Suitable promoters include the following: where A is selected from ammonium, cesium, potassium, rubidium, thallium and mixtures thereof; B is copper and/or vanadium; C is antimony, arsenic, bismuth and/or tellurium; D is palladium; E is aluminium, barium, calcium, cerium, chromium, cobalt, iron, magnesium, manganese, nickel, tantalum, titanium, tungsten, zinc, zirconium, chlorine and/or bromine; and, wherein x can be 6 to 14 and is preferably 12, y can be 0.1 to 15 and is preferably 1 to 1.5, a can be 0.1 to 3 and is preferably 1 to 2, b can be 0.1 to 3 and is preferably 0.1 to 1, c can be 0 to 2 and is preferably 0 to 0.7, d can be 0 to 2 and is preferably 0 to 1, e can be 0 to 4 and is preferably 0 to 1, and z is a number necessary to satisfy the other elements. Suitable catalysts and the preparation thereof have been described in several U.S. patents owned by us and include, for instance, U.S.—A—4,083,805 and 4,138,366. Of these many catalyst those having a ratio of molybdenum to phosphorus of from about 3:1 to as high as 15:1 can be employed with 9 to 12:1 being preferred. Two catalysts which have been treated according to the method of the present invention have the formulae:—

$$Mo_{12}PAs_{0.5}Cu_{0.25}O_z \text{ and } Mo_{12}PSb_{0.22}Cu_{0.25}O_z.$$

The conversion of aldehyde to acid is accomplished with molecular, oxygen conducted directly to the reaction vessel, or supplied as air. The oxygen and aldehyde reactants are preferably carried by steam with the foregoing reactants collectively being referred to as the reactant feed. The steam can optionally be replaced by recycle gases from the reactor which would normally include nitrogen, oxygen, carbon oxides and other gases which would also comprise a portion of the reactant feed. In some oxidation systems, the reactant feed could also include the effluent from a first stage reactor wherein isobutylene is principally converted to methacrolein. When the effluent comprises the reactant feed, it will be understood that other components will also be present; several that are by products of the first stage conversion and others such as air which would normally be added for the conversion of methacrolein.

The conversion reaction can be conducted in either a fixed-bed or fluid-bed reactor at temperatures of from 200°C to 400°C and pressures of about 0.2 (0.2 bar) to about 10 atmospheres (10 bar). The catalysts may be in a supported or unsupported form; suitable support materials including silica, alumina, boron-phosphate, titania, zirconia and the like and preferably Alundum® as well as mixtures thereof. The catalysts can have any of the conventional fixed-bed forms such as coated, tablet, pellet, extruded, spherical, or fluid-bed forms such as microspherical or other forms known in the art. Presence of the catalyst increases the rate and percent of conversion, the selectivity of the reaction, wherein the aldehyde to acid conversion is favored, and the single pass yield.

Activation

Activation of the catalyst can be carried out in the reactor by charging the catalyst precursor to the reactor and treating it with a compound selected from gaseous oxides of nitrogen, nitric acid, nitrous acid or mixtures thereof. Nitric oxide has been found to be particularly suitable for this method. If desired, the reactor can be initially flushed with an inert gas, such as helium or nitrogen, although this step is not essential. Similarly, the reactivating gas can be carried with nitrogen or other inert gas to the reactor for treatment of the catalyst.

The feed of nitric oxide is generally conducted over the catalyst precursor for a period of time of from one minute to several hours when a low amount of feed is employed. The amount of the nitric oxide introduced into the reactor can vary as desired but generally an amount volume equal to 0.5 to 50 times the volume of the catalyst would be satisfactory. The step of treating can be conducted at a temperature ranging from 125°C to 400°C with 150°C to 350°C being preferred. Treatment can be conducted at pressures ranging from near atmospheric to superatmospheric.

In contrast to the known air activation of these catalysts which is conducted at 370°C, the catalyst composition can be activated according to the method of the invention at temperatures from 125°C to 400°C, with a range of 150°C to 350°C being preferred. Regarding pressure, subatmospheric, ambient or slightly elevated *i.e.,* between 0.2 (0.2 bar) and three or four atmospheres (3 or 4 bar) is suitable. Time for the treatment with the nitrogen-containing compound can range from one minute to three hours with one hour being preferred.

In actual operation, the catalyst precursor, comprising the dried salts of the active catalyst component in suitable form for loading in a reactor, may be placed in a reactor and optionally flushed with nitrogen. Heating of the precursor is then conducted followed by the step of treating the catalyst precursor with a nitrogen-containing compound to form the activated catalyst. Following activation treatment, the reactor is heated to reaction conditions as may be necessary and the hydrocarbon reactant, *e.g.,* methacrolein or reactant feed is passed over the catalyst for the desired selective chemical reaction to occur.

The following Examples illustrate the invention:

In these Examples three types of promoted catalysts were activated and subsequently employed for the selective oxidation of methacrolein (MA) to methacrylic acid (MAA). Table I presents the activation conditions and results for the arsenic-copper promoted catalyst precursor $Mo_{12}PAs_{0.5}Cu_{0.25}O_z$ and subsequent oxidations reactions with the catalyst. Examples 1—5 presented given in that table were given an activation temperature of 245°C and time of one hour. Nitric oxide with nitrogen, volume percent ratio of 49/51 $NO/N_2$, respectively, was selected as the nitrogen-containing compound for the activation of the catalyst precursor. Using the nitric oxide activated catalyst, a feed of methacrolein/water/air in the volume ratio of 1:8.7:10.6 respectively was fed thereover at 315°C. The volume of the hydrocarbon feed to that of the catalyst per hour was approximately 30. Contact time of the hydrocarbon feed over the catalyst was between two and three seconds.

Example 1 was a control catalyst having only air activation at 245°C. Activity was determined at 320°C by measuring the conversion to methacrylic acid after one hour of use with the hydrocarbon feed. Another charge of the catalyst precursor was then given an activation treatment with $NO/N_2$ and tested at successive periods of time on-stream with the reactant feed, as presented in Examples 2—5.

In order to evaluate the effectiveness of the method set forth herein, certain yields were calculated by measuring the percent total conversion, percent per single pass yield or percent yield (% Yield) and percent selectively (% Sel), which are defined as follows:

$$\text{Percent conversion} = \frac{\text{Moles of methacrolein reacted}}{\text{Moles of methacrolein fed}} \times 100$$

$$\text{Percent single pass yield} = \frac{\text{Moles of product recovered}}{\text{Moles of methacrolein fed}} \times 100$$

$$\text{Percent selectivity} = \frac{\text{Moles of methacrylic acid recovered}}{\text{Moles of methacrolein reacted}} \times 100$$

TABLE I
Activation of $Mo_{12}PAs_{0.5}Cu_{0.25}O_z$ Precursor with nitric oxide

| Example No. | Treatment | Activation time and temp °C | % Yield of MAA | % Sel to MAA | Total conversion | Run (hrs.) |
|---|---|---|---|---|---|---|
| 1 | Air | 1 hr. at 245° | 5.12 | 55.8 | 9.2 | 1.0 |
| 2 | $NO/N_2$ | 1 hr. at 245° | 68.4 | 73.4 | 93.2 | 1.0 |
| 3 | — | — | 71.5 | 78.3 | 91.3 | 3.0 |
| 4 | — | — | 76.5 | 86.9 | 88.0 | 19.6 |
| 5 | — | — | 74.6 | 85.1 | 87.7 | 24.2 |

As is evident from Table I, activation in air at only 245°C for one hour was insufficient to bring the catalyst to its full potential. This is reflected by the extremely poor yields for Example 1. In order to activate the catalyst in air, a temperature of approximately 370°C and a period of time of several hours is necessary. By reviewing the significantly high yields for Examples 2—5, it can readily be seen that the method of the present invention permits the activation of PMA based catalysts to occur at a relatively low temperature and quickly. Inasmuch as the catalyst is activated at a relatively low temperature it will have a greater activity for a longer period of time before regeneration is required.

Table II presents the activation conditions of another catalyst precursor,

$$Mo_{12}PK_{1.2}Mg_{0.5}As_{0.6}Cu_{0.2}V_{0.5}O_z,$$

and subsequent oxidation reactions with the catalyst. The catalyst was supported on a 0.3 cm spherical Alundum carrier at the 33 weight percent level. Nitric oxide was again employed with nitrogen gas as in Table I.

Example 6 was a control given an air activation for three hours at 400°C followed by one hour of hydrocarbon feed at 345°C. For Example 7, another charge of the catalyst precursor received the $NO/N_2$ activation for 0.75 hour at 320°C followed by one hour of the hydrocarbon feed, after which activity tests were conducted for both examples at 320°C. Significant improvements in total conversion, yield and selectivity were observed following the nitric oxide activation.

TABLE II
Activation of $Mo_{12}PK_{1.2}Mg_{0.5}As_{0.6}Cu_{0.2}V_{0.5}O_z$ precursor with nitric oxide

| Example No. | Treatment | Activation time and temp °C | % Yield of MAA | % Sel to MAA | Total conversion | Run (hrs.) |
|---|---|---|---|---|---|---|
| 6 | Air | 3 hrs. at 400° | 21.7 | 85.0 | 25.6 | 1 |
| 7 | $NO/N_2$ | 0.75 hr. at 320° | 75.6 | 86.6 | 87.3 | 1 |

Table III presents the activation conditions of another catalyst precursor

$$Mo_{12}P_{1.33}K_{1.5}Cu_{0.25}V_{0.25}Ba_{0.1}O_z,$$

and subsequent oxidations with the catalyst. The catalyst was supported on a 0.3 cm spherical Alundum carrier at the 35 weight percent level. Nitric oxide was employed with nitrogen gas as a carrier for Examples 10, 11, 15 and 16 and with helium for Examples 17 and 18.

Examples 8 and 9 represented a control that had received air activation at 370°C for one hour and hydrocarbon feed for one hour at 345°C. Two activation tests are reported, one at 320°C, Example 8, and the other at 315°C, Example 9.

For Examples 10 and 11, the catalyst received one hour of air activation at 370°C, one hour of hydrocarbon feed at 345°C and 0.25 hour of the $NO/N_2$ treatment at 315°C. Activation tests were conducted at 315°C and 305°C and have been reported as Examples 10 and 11, respectively.

For Examples 12 and 13, the catalyst received three hours of air activation at 370°C and one hour of hydrocarbon feed at 345°C. Activation tests were conducted at 320°C and 305°C and have been reported as Examples 12 and 13, respectively.

For Example 14, the catalyst received three hours of treatment with nitrogen gas at 370°C followed by one hour of hydrocarbon feed at 345°C. An activation test was conducted at 320°C and has been reported as Example 14.

For Examples 15 and 16, the catalyst received 0.75 hour of treatment with $NO/N_2$ at 315°C. Activation tests were conducted at 315°C and 305°C and have been reported as Examples 15 and 16, respectively.

For Examples 17 and 18, the catalyst received 0.75 hour of treatment with NO/He at 315°C following which activation tests were conducted at 315°C and 305°C which have been reported as Examples 17 and 18, respectively.

TABLE III
Activation of $Mo_{12}P_{1.33}K_{1.5}Cu_{0.25}V_{0.25}Ba_{0.1}O_z$ Precursor with nitric oxide

| Example No. | Treatment | Activation time and temp °C | % Yield of MAA | % Sel to MAA | Total conversion | Run (hrs.) |
|---|---|---|---|---|---|---|
| 8 | Air | 1 hr. at 370° | 68.5 | 83.6 | 82.0 | 1 |
| 9 | Air | 1 hr. at 370° | 65.4 | 84.0 | 77.9 | 1 |
| 10 | Air and $NO/N_2$ | 1 hr. at 370°, 0.25 hr. at 315° | 66.3 | 68.5 | 96.8 | 1 |
| 11 | Air and $NO/N_2$ | 1 hr. at 370° 0.25 hr. at 315° | 72.7 | 77.5 | 93.7 | 1 |
| 12 | Air | 3 hrs. at 370° | 73.1 | 75.7 | 96.5 | 1 |
| 13 | Air | 3 hrs. at 370° | 72.9 | 82.0 | 88.9 | 1 |
| 14 | $N_2$ | 3 hrs. at 370° | 74.1 | 79.6 | 93.0 | 1 |
| 15 | $NO/N_2$ | 0.75 hr. at 315° | 72.9 | 77.3 | 94.4 | — |
| 16 | $NO/N_2$ | 0.75 hr. at 315° | 71.9 | 82.5 | 87.2 | — |
| 17 | NO/He | 0.75 hr. at 315° | 71.8 | 74.7 | 96.1 | — |
| 18 | NO/He | 0.75 hr. at 315° | 75.1 | 84.9 | 88.4 | — |

As is evident from Table II, air activation of the catalyst precursor was highly unsatisfactory, in fact, it was so low that proper activation could not be achieved. Activation with $NO/N_2$, on the other hand, reported in Example 7, was highly satisfactory.

From Table III, it can be seen that the catalyst precursor could be activated in air or nitrogen gas at a temperature of 370°C for three hours. Treatment with nitric oxide at 315°C for as little as 0.75 hour provided comparable to slightly better activation.

Based upon the satisfactory yields of methacrylic acid that have been obtained when a PMA based catalyst has been activated according to the method set forth herein, it is apparent that the objects of the invention have been met. It is to be understood that the activation disclosed herein is applicable in general to PMA based catalysts which, as stated hereinabove, can include one or more promoters. Presence or absence of these additional elements or compounds will not affect the method of preparation set forth herein. And, while these may be employed to improve some aspect of the activity of the catalyst, the specific catalyst composition is not deemed to be a portion of the invention claimed herein.

Maintenance of activity during reactor shutdown

As stated hereinabove, a nitrogen-containing compound selected from gaseous oxides of nitrogen, nitric acid and nitrous acid and mixtures thereof may be utilized to flush the reactor prior to shutdown. Of the gaseous oxides of the nitrogen having utility in the present invention mixtures with nitric oxide are preferred. Nitric or nitrous acid could also be employed separately or with an oxide of nitrogen. The feed of nitric oxide is generally conducted over the catalyst for a period of time of from about one minute to about several hours when a low rate of feed is employed. The amount of the nitric oxide introduced into the reactor can vary as desired but generally an amount in volume equal to 0.5 to 50 times the volume of the catalyst would be satisfactory. The step of flushing is carried out at a temperature within the range of 125°C to 400°C. Preferably it is conducted at a temperature ranging from 150°C to 370°C with 225°C to 350°C being preferred. Treatment can be conducted at near atmospheric or superatmospheric pressures.

In Examples 19—22 which follow, a PMA promoted catalyst having the formula

$$Mo_{12}PRbBi_{0.25}As_{0.25}Cu_{0.25}V_{0.2}O_z$$

was essentially deactivated by flushing the reactor with steam, nitrogen, air and ammonia gas in four separate instances prior to shutdown in order to demonstrate the before and after activity of the catalyst following typical shutdown procedures. 30 weight percent of active catalyst component was supported on a 0.3 cm spherical Alundum carrier.

The procedure and apparatus employed involved a 20 $cm^3$ microreactor utilized in tandem with a larger isobutylene oxidation reactor fed with isobutylene, steam and air. A slip stream of the reactor effluent from the latter, containing 72% methacrolein and 11% methacrylic acid was fed to the microreactor at 325°C for a contact time of approximately 2.9 seconds for conversion to methacrylic acid. Alternatively, methacrolein was fed to the 20 $cm^3$ microreactor at 315°C to 325°C at a contact time of approximately 3.1 seconds for conversion to methacrylic acid. This latter procedure was employed for Examples 23—26.

The examples reported in Table IV indicates yields in terms of % Conversion of methacrolein (MA) and % Sel to methacrylic acid (MAA) after several hours of running with a freshly activated catalyst. The reactor was then swept with one of the gases, maintained static for many hours after which

hydrocarbon feed was resumed and yields were again determined. After the catalyst was deactivated, % Selectivity was not significantly affected, however, % Conversion was greatly reduced. It will be noted that the initial conversions of methacrolein prior to shutdown were each different for Examples 19—22 notwithstanding the fact that the catalyst composition was the same. The differences were due to the fact that the catalysts received different activations and were each on-stream for various periods of time.

TABLE IV

Deactivation of PMA based catalyst utilizing standard shutdown procedures

| Example No. | % Conversion of MA[a] | % Sel to MAA[a] | Flush gas | Static period and temp. following flushing | % Conversion of MA[b] | % Sel to MAA[b] |
|---|---|---|---|---|---|---|
| 19 | 82.6 | 83.6 | Steam | 76 hrs. at 325°C | 34.3 | 98.3 |
| 20 | 78.2 | 82.9 | Nitrogen | 74 hrs. at 325°C | 42.2 | 91.4 |
| 21 | 68.2 | 87.0 | Air | 80 hrs. at 325°C | 38.8 | 79.7 |
| 22 | 70.4 | 70.1 | Ammonia | 6 hrs. at 325°C | 37.6 | 69.5 |

[a] determined prior to shutdown
[b] determined subsequent to shutdown

In each of the four examples % Conversion of methacrolein was generally high and satisfactory. However, by flushing the reactor with any of the gases prior to shutdown, it is seen that the % Conversion is decreased anywhere from 43 to 58% upon resumption of the oxidation. Such decreases indicate a severely deactivated catalyst which will require reactivation before being used further.

The alternate procedure set forth hereinabove was employed in the next two examples reported in Table V for the composition

$$Mo_{12}PRbBi_{0.25}V_{0.5}Cu_{0.25}O_z$$

except that in Example No. 23 no flushing step was made, while in Example 24 flushing with nitric oxide for 10 minutes was conducted prior to shutdown.

TABLE V

Treatment of PMA based catalyst with nitric oxide prior to shutdown

| Example No. | % Yield of MAA[a] | Flush gas | Static period and temp. following flushing | % Yield of MAA[b] |
|---|---|---|---|---|
| 23 | 64.2 | None | 90 hrs. at 315°C | 56.8 |
| 24 | 64.3 | NO | 89 hrs. at 315°C | 71.7 |

[a] determined prior to shutdown
[b] determined subsequent to shutdown

Example No. 23 shows that with no flush gas, maintaining the reactor static, at a temperature of 315°C for 90 hours, the catalyst was partially deactivated, % Yield to methacrylic acid decreasing by 11.5%. However, when nitric oxide was employed in the flushing step, the catalyst activity was not only maintained during shutdown but was actually improved, as indicated by the % Yield to methacrylic acid values for Examples 24 when oxidation was resumed after shutdown.

In Table VI, the method of the present invention was conducted with the catalysts

$$Mo_{12}PRbAs_{0.1}V_{0.25}O_z \text{ and } Mo_{12}P_{1.5}RbV_{0.25}Cu_{0.25}O_z$$

in Examples 25 and 26 respectively, utilizing nitric oxide. Unlike Examples 19—25 the catalyst in Example 26 was tabletted, representing 100% active ingredient (unsupported), rather than coated on a support. The tablet was crylindrical, approximately 4.5 mm in diameter by 3.5 mm high. Flushing with nitric oxide for Examples 25 and 26 was for 15 and 5 minutes, respectively. By comparing the before and after shutdown yields it is again evident that the nitric oxide flushing step improved catalyst activity for Example 25 and maintained it for Example 26.

TABLE VI
Treatment of PMA based catalysts with nitric oxide prior to shutdown

| Example No. | % Yield of MAA[a] | % Sel to MAA[a] | % Total conversion | Static period and temp. following flushing | % Yield of MAA[b] | % Sel to MAA[b] | % Total conversion |
|---|---|---|---|---|---|---|---|
| 25 | 76.6 | 81.8 | 93.6 | 90 hrs. at 325°C | 79.3 | 81.9 | 96.8 |
| 26 | 71.8 | 76.3 | 94.1 | 138 hrs. at 315°C | 71.1 | 73.1 | 97.2 |

[a] determined prior to shutdown
[b] determined subsequent to shutdown

By observing the maintenance and improvement in the activity of the catalyst employed herein subsequent to shutdown according to the method set forth herein, it should be apparent that the objects of the invention have been met. It is to be understood that the method disclosed herein is applicable in general to PMA based catalysts which, as stated hereinabove, can include one or more promoters. Presence or absence of these additional elements will not affect the method set forth herein.

Reactivation

In normal use, the apparent contact time of feed over catalyst in the reactor can vary from a fraction of a second to as many as 20 seconds or more. A charge of fresh catalyst will remain active for approximately 100—200 hours after which time a marked decrease in conversion single pass yield and percent total conversion is observed. In order to improve these, the catalyst can be reactivated according to the method of the present invention.

Reactivation includes the step of feeding a nitrogen-containing compound selected from gaseous oxides of nitrogen, nitric acid, and nitrous acid and mixtures thereof over the deactivated catalyst. A preferred gaseous oxide of nitrogen is nitric oxide. Additionally, it is believed that other oxidants can be employed; examples of which would include hydrogen peroxide, chlorine and nitrosyl chlorine.

The feed of nitrogen oxide is generally conducted over the deactivated catalyst until $CO_2$ evolution is complete. The feed of nitric oxide is generally conducted over the catalyst for a period of time of from one minute to several hours preferably five minutes to three hours, when a low rate of feed is employed. The amount of the nitric oxide introduced into the reactor can vary as desired but generally an amount in volume equal to 0.5 to 50 times the volume of the catalyst would be satisfactory. Treatment can be conducted at pressures ranging from near atmospheric (1 bar) to superatmospheric (greater than 1 bar). The nitrogen oxide can be separately fed over the deactivated catalyst or combined with an inert carrier such as helium or nitrogen in any ratio of $NO:N_2$ of from 5:95 by volume percent. Of course, other gases, ratios of reactivant of carrier, and pressures can be employed as may be desired. The temperature at which reactivation can be conducted ranges from 125°C to 400°C with temperatures of 175°C to 350°C being preferred.

When the reactivation is to be conducted *in situ*, the reactant feed to the reactor would first be terminated, following which the reactor should be swept with a gas such as air, nitrogen or steam. During this time the temperature could be adjusted from that for the methacrolein conversion to the desired temperature for reactivation as necessary. At this point the nitric oxide/nitrogen mixture would be fed to the reactor, and, following reactivation, the catalyst will be ready for selective oxidation of the methacrolein. In this manner, downtime for removal of the catalyst is avoided.

Alternatively, in fluid-bed systems, a slip stream could be treated with nitric oxide and then returned to the reaction zone thereby providing continuous catalyst reactivation. It is further possible in either fluid or fixed-bed systems, for a stream of the nitrogen oxide to be fed concurrently with the hydrocarbon feed at a rate sufficient to prevent deactivation.

In the examples which follow, a mixture of nitric oxide in nitrogen, concentration of the former being approximately 49 volume percent, was fed to deactivated catalysts at a flow rate of 190 $cm^3$/minute for a contact time of two to three seconds. Reactivation temperatures ranged between 175°C and 315°C while the treatment time ranged between one and two hours. At the end of reactivation treatment, the reactor temperature was adjusted to 315°C, the nitrogen oxide/nitrogen flow was terminated and the reactant feed resumed.

Two types of promoted catalysts were reactivated and subsequently employed for the selective oxidation of methacrolein (MA) to methacrylic acid (MAA). Table VI presents the reactivation conditions and results for the arsenic-copper promoted catalyst

$$PMo_{12}As_{0.5}Cu_{0.25}O_z.$$

The catalyst component was supported on a 0.3 cm Alundum carrier for Examples 27—36; 35 weight percent of the catalyst component thereon in Examples 27—31 and 30 weight percent of the catalyst

component thereon in Examples 32—36. Contact time of the reactant feed over the catalyst varied from 1.95 seconds to 2.81 seconds and atmospheric pressure was employed.

Example 27 was a control catalyst having no reactivation treatment. Conversion measurements were made after the catalyst had been used for 20 hours. The control was treated successively to the $NO/N_2$ reactivation feed for periods of one hour in each of the succeeding examples, 28—31. Following reactivation, the reactant feed was again resumed and conversion measurements made after various periods of time following each reactivation as indicated in Table VII under the heating Run (hrs.).

Example 32 was another charge of the same catalyst composition which had been run for 143.4 hours and received no reactivation. The control was reactivated for Example 33 with one treatment of $NO/N_2$ at 175°C and tested at successive periods of time on-stream with the reactant feed, as presented in Table VII, Examples 33—36.

TABLE VII

Nitric oxide reactivation of $PMo_{12}As_{0.5}Cu_{0.25}O_z$

| Example No. | Treatment | Reactivation conditions time and temp °C | % Yield of MAA | % Sel to MAA | % Total conversion | Run (hrs.). |
|---|---|---|---|---|---|---|
| 27 | None | — | 20.7 | 92.9 | 22.3 | 20 |
| 28 | $NO/N_2$ | 1 hr. at 250° | 38.9 | 94.1 | 41.3 | 0.65 |
| 29 | $NO/N_2$ | 1 additional hr. at 250° | 40.4 | 94.1 | 42.9 | 0.3 |
| 30 | $NO/N_2$ | 1 additional hr. at 250° | 40.8 | 92.8 | 43.9 | 1.5 |
| 31 | $NO/N_2$ | 1 additional hr. at 257° | 37.0 | 92.8 | 39.9 | 0.25 |
| 32 | None | — | 38.1 | 88.0 | 43.2 | 143.4 |
| 33 | $NO/N_2$ | 1 hr. at 175° | 55.1 | 79.2 | 69.7 | 0.25 |
| 34 | — | — | 55.9 | 84.2 | 66.3 | 4.3 |
| 35 | — | — | 54.4 | 86.1 | 63.2 | 9.9 |
| 36 | — | — | 47.7 | 89.6 | 53.2 | 27.6 |

Table VIII presents the reactivation conditions and subsequent use of the catalyst composition of Table VII. The catalyst was supported on a 0.3 cm spherical Alundum carrier coated at the 30 weight percent level. Contact time varied from 3.07 seconds to 3.21 seconds; pressure was 6 psig (0.4 bar) and atmospheric (1 bar) and the reactivating gas mixture was 50/50, $NO/N_2$ unless otherwise noted.

Example 37 was a control which had been run for 144.6 hours. Reactivation was conducted in Example 38 with one treatment of $NO/N_2$ at 6 psig (0.4 bar). Tests were run at successive time intervals following reactivation and are reported for Examples 37—40.

Example 41 was another charge of the control used for Example 37 reactivation with one treatment of $NO/N_2$ at atmospheric pressure (1 bar) and again tested at successive periods of time on-stream and reported in Examples 41—43.

Example 44 was another charge of the control used for Example 37 reactivated with one treatment of $NO/N_2$, 6.5/93.5, at atmospheric pressure (1 bar) and again tested at successive periods of time on-stream and reported in Examples 44—47.

TABLE VIII

Nitric oxide reactivation of $PMo_{12}As_{0.5}Cu_{0.25}O_z$

| Example No. | Treatment | Reactivation conditions time and temp °C | % Yield of MAA | % Sel to MAA | % Total conversion | Run (hrs.). |
|---|---|---|---|---|---|---|
| 37 | None | — | 55.9 | 87.5 | 63.9 | 144.6 |
| 38 | $NO/N_2$ | 1 hr. at 325° | 67.3 | 85.7 | 78.5 | 1.0 |
| 39 | $NO/N_2$ | — | 69.3 | 82.2 | 84.4 | 4.0 |
| 40 | $NO/N_2$ | — | 71.0 | 82.9 | 85.7 | 6.25 |
| 41 | $NO/N_2$ | 1 hr. at 325° | 62.4 | 82.5 | 75.7 | 1.0 |
| 42 | $NO/N_2$ | — | 65.6 | 82.5 | 79.6 | 3.25 |
| 43 | $NO/N_2$ | — | 67.9 | 84.1 | 80.8 | 6.25 |
| 44 | $NO/N_2$ | 1 hr. at 325° | 62.2 | 86.9 | 71.5 | 1.0 |
| 45 | $NO/N_2$ | — | 62.6 | 85.7 | 73.1 | 3.25 |
| 46 | $NO/N_2$ | — | 65.4 | 86.5 | 75.6 | 6.25 |
| 47 | $NO/N_2$ | — | 64.9 | 85.4 | 76.1 | 10.25 |

Table IX presents the reactivation conditions and subsequent use of the antimony-copper promoted catalyst $PMo_{12}Sb_{0.22}Cu_{0.25}O_z$. The catalyst component was supported on a 0.3 cm Alundum carrier coated at the 28 weight percent level. Contact time varied from 3.05 seconds to 3.16 seconds; pressure was atmospheric and the reactivating gas mixture was 50/50 $NO/N_2$.

Example 48 was a control which had been run for 273.8 hours. It was reactivated in Example 49 with one treatment of $NO/N_2$ and tested at successive time intervals as reported for Examples 49—53. Example 54 was the catalyst of Example 53 subjected to one additional reactivation.

TABLE IX
Nitric oxide reactivation of $PMo_{12}Sb_{0.22}Cu_{0.25}O_z$

| Example No. | Treatment | Reactivation conditions time and temp °C | % Yield of MAA | % Sel to MAA | % Total conversion | Run (hrs.). |
|---|---|---|---|---|---|---|
| 48 | None | — | 35.3 | 89.7 | 39.4 | 273.8 |
| 49 | $NO/N_2$ | 1 hr. at 315° | 48.0 | 91.3 | 52.6 | 0.3 |
| 50 | $NO/N_2$ | — | 55.3 | 79.4 | 69.7 | 22.5 |
| 51 | $NO/N_2$ | — | 52.5 | 77.4 | 67.9 | 29.7 |
| 52 | $NO/N_2$ | — | 48.0 | 76.9 | 62.4 | 47.8 |
| 53 | $NO/N_2$ | — | 39.9 | 83.9 | 47.6 | 49.1 |
| 54 | $NO/N_2$ | 1.4 additional hr. at 315° | 49.8 | 76.8 | 64.9 | 50.2 |

By reviewing the data presented in Tables VII to IX, it can be seen that in every instance a deactivated catalyst was reactivated according to the method of the present invention, an increase in percent yield and total conversion occurred. Generally speaking, the more severely deactivated the catalyst was prior to treatment the more improved was its performance following reactivation. Based on the work reported in Tables VII—IX, it is envisioned that a catalyst not be permitted to reach a stage of deactivation wherein the percent yield decreases to less than 55%. At this point, the catalyst can be reactivated with relative ease and restored to substantially its full activity.

By observing the dramatic increases in percent yield of methacrylic acid from methacrolein that have been obtained when a deactivated catalyst has been reactivated according to the method set forth herein, it should be apparent that the objects of the invention have been met. It is to be understood that the reactivations disclosed herein are applicable in general to PMA based catalysts which, as stated hereinabove, can include one or more promoters. Presence or absence of these additional elements or compounds will not affect the method of reactivation set forth herein. And, while these may be employed to improve some aspect of the activity of the catalyst when fresh or reactivated, the specific catalyst composition is not deemed to be a portion of the invention claimed herein.

**Claims**

1. A method for the activation, including maintenance and improvement of activity during reactor shutdown and reactivation of promoted phosphomolybdic acid based catalysts characterised in that one treats the catalyst precursor with a nitrogen-containing compound selected from gaseous oxides of nitrogen, nitric acid and nitrous acid and mixtures thereof at a temperature of from 125°C to 400°C.

2. A method as claimed in claim 1, characterised in that the treatment is carried out for a period of from 1 minute to three hours.

3. A method as claimed in claim 1 or claim 2 characterised in that the treatment is conducted at a temperature of from 150°C to 350°C.

4. A method as claimed in any of claims 1 to 3 characterised in that one uses as oxide of nitrogen, nitric oxide, and it is carried with an inert gas.

5. A method as claimed in claim 4 characterised in that the inert gas is nitrogen.

6. A method as claimed in any of claims 1 to 5 characterised in that the catalyst precursor comprises phosphorus and molybdenum and at least one promoter-containing compound selected from acids and decomposable salts of promoters selected from ammonium, cesium, potassium, rubidium, thallium, copper, vanadium, antimony, arsenic, bismuth, tellurium, palladium, aluminium, barium, calcium, cerium, chromium, cobalt, iron, magnesium, manganese, nickel, tantalum, titanium, tungsten, zinc, zirconium, chlorine and bromine.

7. A method for maintaining the activity of promoted phosphomolybdic acid based catalysts during reactor shutdown comprising the steps of:

terminating the feed to the reactor comprising the catalyst; and,

flushing the reactor with a nitrogen-containing compound selected from gaseous oxides of nitrogen, nitric acid and nitrous acid and mixtures thereof at a temperature of from 150°C to 370°C.

8. A method for improving the activity of PMA based catalysts during shutdown comprising the steps of:

terminating the feed to the reactor containing the catalyst; and,
flushing the reactor with an oxide of nitrogen at a temperature of from 150°C to 370°C.

9. A method as claimed in claim 7 or claim 8 characterised in that the step of flushing is conducted at a temperature of from 225°C to 350°C.

10. A method as claimed in any of claims 7, 8 and 9 characterised in that the amount of the oxide of nitrogen introduced into the reactor, the oxide being nitric oxide, for the step of flushing, equals from 0.5 to 50 times the volume of said catalyst.

11. A method as claimed in any of claims 7 to 10 characterised in that the step of flushing is conducted for a period of from one minute to several hours.

12. A method for the reactivation of PMA based catalysts comprising the step of:

feeding a nitrogen-containing compound selected from gaseous oxides of nitrogen, nitric acid and nitrous acid and mixtures thereof over the catalyst a temperature of 125°C to 400°C.

13. A method as claimed in claim 12 characterised in that the catalyst is contained within a reactor and which includes the steps of:

terminating the feed of the reactant to the reactor; and
sweeping the reactor with an inert gas prior to the feeding step.

14. A method as claimed in claim 12 or claim 13 characterised in that the step of feeding is conducting at a temperature of from 175°C to 350°C.

15. A method as claimed in any of claims 12 to 14 characterised in that the step of feeding with a nitrogen oxide, the oxide being nitric oxide, is conducted for a period of from five minutes to three hours at a pressure ranging from near atmospheric (1 Bar) to superatmospheric (greater than 1 Bar).

16. A method as claimed in any of claims 1 to 15 characterised in that the promoted phosphomolybdic acid based catalyst has the formula $Mo_xP_yA_aB_bC_cD_dE_eO_z$ wherein A is selected from ammonium, cesium, potassium, rubidium, thallium and mixtures thereof; B is selected from copper and/or vanadium; C is selected from antimony, arsenic, bismuth and/or tellurium; D is palladium; E is aluminium, barium, calcium, cerium, chromium, cobalt, iron, magnesium, manganese, nickel, tantalum, titanium, tungsten, zinc, zirconium, chlorine, and/or bromine; x can be 6 to 14; y can be 0.1 to 15; a can be 0.1 to 3; b can be 0.1 to 3; c can be 0 to 2; d can be 0 to 2; e can be 0 to 4 and z is a number necessary to satisfy the other elements.

**Patentansprüche**

1. Verfahren zur Aktivierung einschießlich der Aufrechterhaltung und Verbesserung der Aktivität während einer Reaktor-Stillegung und zur Reaktivierung von mit einem Promotor versehenen Katalysatoren auf Phosphormolybdänsäure-Basis, dadurch gekennzeichnet, daß der Katalysator-Vorläufer mit einer Stickstoff enthaltenden Verbindung, ausgewählt aus gasförmigen Stickstoffoxiden, Salpetersäure und Salpetriger Säure und Mischungen davon, bei einer Temperatur von 125° bis 400°C behandelt wird.

2. Verfahren nach Anspruch 1, dadurch gekennzeichnet, daß die Behandlung für einen Zeitraum von 1 Minute bis 3 Stunden durchgeführt wird.

3. Verfahren nach Anspruch 1 oder 2, dadurch gekennzeichnet, daß die Behandlung bei einer Temperatur von 150°C bis 350°c durchgeführt wird.

4. Verfahren nach einem der Ansprüche 1 bis 3, dadurch gekennzeichnet, daß als Stickstoffoxid Stickoxid verwendet wird und daß es mit einem Inertgas durchgeführt wird.

5. Verfahren nach Anspruch 4, dadurch gekennzeichnet, daß das Inertgas Stickstoff ist.

6. Verfahren nach einem der Ansprüche 1 bis 5, dadurch gekennzeichnet, daß der Katalysator-Vorläufer Phosphor und Molybdän sowie mindestens eine Promotor-enthaltende Verbindung, ausgewählt aus Säuren und zersetzbaren Salzen von Promotoren, ausgewählt aus Ammonium, Cäsium, Kalium, Rubidium, Thallium, Kupfer, Vanadin, Antimon, Arsen, Wismut, Tellur, Palladium, Aluminium, Barium, Calcium, Cer, Chrom, Kobalt, Eisen, Magnesium, Mangan, Nickel, Tantal, Titan, Wolfram, Zink, Zirkonium, Chlor und Brom, enthält.

7. Verfahren zur Aufrechterhaltung der Aktivität von mit einem Promoter versehenen Katalysatoren auf Phosphormolybdänsäure-Basis während der Reaktor-Stillegung, das die folgenden Stufen umfaßt:

Beendigung der Beschickung des den Katalysator enthaltenden Reaktors; und
Spülen des Reaktors mit einer Stickstoff enthaltenden Verbindung, ausgewählt aus gasförmigen Stickstoffoxiden, Salpetersäure und Salpetriger Säure und Mischungen davon, bei einer Temperatur von 150°C bis 370°C.

8. Verfahren zur Verbesserung der Aktivität von Katalysatoren auf PMA-Basis währen der Reaktor-Stillegung, das die folgenden Stufen umfaßt;

Beendigung der Beschickung des den Katalysator enthaltenden Reaktors; und
Spülen des Reaktors mit einem Stickstoffoxid bei einer Temperatur von 150°C bis 370°C.

9. Verfahren nach Anspruch 7 oder 8, dadurch gekennzeichnet, daß die Spülung bei einer Temperatur von 225°C bis 350°C durchgeführt wird.

10. Verfahren nach einem der Ansprüche 7, 8 und 9, dadurch gekennzeichnet, daß die zum Spülen in den Reaktor eingeführte Menge an Stickstoffoxid, wobei es sich bei dem Oxid um Stickoxid handelt, dem 0,5- bis 50-fachen des Volumens des Katalysators entspricht.

11. Verfahren nach einem der Ansprüche 7 bis 10, dadurch gekennzeichnet, daß die Spülung für eine Zeitspanne von 1 Minute bis zu mehreren Stunden durchgeführt wird.

12. Verfahren zur Reaktivierung von Katalysatoren auf PMA-Basis, das die Stufe umfaßt:

Einführung einer Stickstoff enthaltenden Verbindung, ausgewählt aus gasförmigen Stickstoffoxiden, Salpetersäure und Salpetriger Säure und Mischungen davon, über den Katalysator bei einer Temperatur von 125°C bis 400°C.

13. Verfahren nach Anspruch 12, dadurch gekennzeichnet, daß der Katalysator innerhalb eines Reaktors enthalten ist und daß es die folgenden Stufen umfaßt:
Beendigung der Einführung des Reaktanten in den Reaktor; und
Spülen des Reaktors mit einem Inertgas vor der Beschickungsstufe.

14. Verfahren nach Anspruch 12 oder 13, dadurch gekennzeichnet, daß die Beschickung bei einer Temperatur von 175°C bis 350°C durchgeführt wird.

15. Verfahren nach einem der Ansprüche 12 bis 14, dadurch gekennzeichnet, daß die Beschickung mit einem Stickstoffoxid, wobei es sich bei dem Oxid um Stickoxid handelt, für einen Zeitraum von 5 Minuten bis zu 3 Stunden bei einem Druck innerhalb des Bereiches von nahezu Atmosphärendruck (1 Bar) bis zu Atmosphärenüberdruck (mehr als 1 Bar) durchgeführt wird.

16. Verfahren nach einem der Ansprüche 1 bis 15, dadurch gekennzeichnet, daß der mit einem Promotor versehene Katalysator auf Phosphormolybdänsäure-Basis die Formel $Mo_xP_yA_aB_bC_cD_dE_eO_z$ hat, worin A ausgewählt wird aus Ammonium, Cäsium, Kalium, Rubidium, Thallium und Mischungen davon; B ausgewählt wird aus Kupfer und/oder Vanadium; C ausgewählt wird aus Antimon, Arsen, Wismut und/oder Tellur; D Palladium; E Aluminium, Barium, Calcium, Cer, Chrom, Kobalt, Eisen, Magnesium, Mangan, Nickel, Tantal, Titan, Wolfram, Zink, Zirkonium, Chlor und/oder Brom bedeuten; x eine Zahl von 6 bis 14; y eine Zahl von 0,1 bis 15; a eine Zahl von 0,1 bis 3; b eine Zahl von 0,1 bis 3; c eine Zahl von 0 bis 2; d eine Zahl von 0 bis 2; e eine Zahl von 0 bis 4 und z eine Zahl darstellen, die zur Absättigung der übrigen Elemente erforderlich ist.

**Revendications**

1. Procédé pour l'activation, incluant le maintient et l'amélioration de l'activité pendant l'arrêt du réacteur et la réactivation de catalyseurs à base d'acide phosphomolybdique avec promoteur(s), caractérisé par le fait qu'on traite le précurseur du catalyseur avec un composé renfermant de l'azote et choisi dans le groupe formé par les oxydes gazeux d'azote, l'acide nitrique et l'acide nitreux, ainsi que leurs mélanges, à une température comprise entre 125°C et 400°C.

2. Procédé selon la revendication 1, caractérisé par le fait qu'on effectue le traitement pendant une durée comprise entre une minute et trois heures.

3. Procédé selon la revendication 1 ou la revendication 2, caractérisé par le fait qu'on conduit le traitement à une température comprise entre 150°C et 350°C.

4. Procédé selon l'une des revendications 1 à 3, caractérisé par le fait qu'on utilise, comme oxyde de l'azote, l'oxyde nitrique, et que ce dernier est porté par un gaz inerte.

5. Procédé selon la revendication 4, caractérisé par le fait que le gaz inerte est l'azote.

6. Procédé selon l'une des revendications 1 à 5, caractérisé par le fait que le précurseur du catalyseur comprend du phosphore et du molybdène et au moins un composé renfermant un ou des promoteur(s) et choisi dans le groupe formé par les acides et les sels décomposables de promoteurs choisis dans le groupe formé par l'ammonium, le césium, le potassium, le rubidium, le thallium, le cuivre, le vanadium, l'antimoine, l'arsenic, le bismuth, le tellure, le palladium, l'aluminium, le baryum, le calcium, le cérium, le chrome, le cobalt, le fer, le magnésium, le manganèse, le nickel, le tantale, le titane, le tungstène, le zinc, le zirconium, le chlore et le brome.

7. Procédé pour maintenir l'activité de catalyseurs à base d'acide phosphomolybdique avec promoteur(s) pendant l'arrêt du réacteur, comprenant les étapes consistant à:

— terminer l'alimentation du réacteur comprenant le catalyseur; et
— balayer le réacteur avec un composé renfermant de l'azote et choisi dans le groupe constitué par les oxydes gazeux d'azote, l'acide nitrique et l'acide nitreux, ainsi que leurs mélanges, à une température comprise entre 150°C et 370°C.

8. Procédé pour améliorer l'activité de catalyseurs à base d'APM pendant les arrêts, comprenant les étapes consistant à:

— terminer l'alimentation du réacteur contenant le catalyseur; et
— balayer le réacteur avec un oxyde d'azote à une température comprise entre 150 et 370°C.

9. Procéde selon la revendication 7 ou la revendication 8, caractérisé par le fait qu'on conduit l'étape de balayage à une température comprise entre 225°C et 350°C.

10. Procédé selon l'une des revendications 7, 8 et 9, caractérisé par le fait que la quantité de l'oxyde d'azote introduite dans le réacteur, l'oxyde étant l'oxyde nitrique, pour l'étape de balayage, est égale à 0,5 à 50 fois le volume dudit catalyseur.

11. Procédé selon l'une des revendications 7 à 10, caractérisé par le fait qu'on conduit l'étape de balayage pendant une durée comprise entre une minute et plusieurs heures.

12. Procédé de réactivation de catalyseurs à base d'APM, comprenant l'étape consistant à:

— faire passer un composé renfermant d'azote et choisi dans le groupe formé par les oxydes gazeux de l'azote, l'acide nitrique et l'acide nitreux et leurs mélanges, sur le catalyseur, à une température comprise entre 125°C et 400°C.

13. Procédé selon la revendication 12, caractérisé par le fait que le catalyseur est contenu dans un réacteur, et comprenant les étapes consistant à:

— terminer l'alimentation du réacteur en réactif; et
— balayer le réacteur avec un gaz inert avant l'étape d'alimentation.

14. Procédé selon la revendication 12 ou la revendication 13, caractérisé par le fait que l'on conduit l'étape d'alimentation à une température comprise entre 175°C et 350°C.

15. Procédé selon l'une des revendications 12 à 14, caractérisé par le fait que l'on conduit l'étape d'alimentation avec un oxyde d'azote, l'oxyde étant l'oxyde nitrique, pendant une durée comprise entre cinq minutes et trois heures, à une pression comprise entre une valeur proche de la pression atmosphérique (1 bar) et une valeur supérieure à la pression atmosphérique (supérieure à 1 bar).

16. Procédé selon l'une des revendications 1 à 15, caractérisé par le fait que le catalyseur à base d'acide phosphomolybdique avec promoteur(s) répond à la formule $Mo_xP_yA_aB_bC_cD_dE_eO_z$, dans laquelle A est choisi dans le groupe formé par l'ammonium, le césium, le potassium, le rubidium, le thallium et leurs mélanges; B est choisi dans le groupe formé par le cuivre et/ou le vanadium; C est choisi dans le groupe formé par l'antimoine, l'arsenic, le bismuth et/ou le tellure; D est le palladium; E est l'aluminium, le baryum, le calcium, le cérium, le chrome, le cobalt, le fer, le magnésium, le manganèse, le nickel, le tantale, le titane, le tungstène, le zinc, le zirconium, le chlore et/ou le brome; x peut valoir de 6 à 14; y peut valoir de 0,1 à 15; a peut valoir de 0,1 à 3; b peut valoir de 0,1 à 3; c peut valoir de 0 à 2; de peut valoir de 0 à 2; e peut valoir de 0 à 4, et z est un nombre nécessaire pour satisfaire les autres éléments.